# NEUE EUROPÄISCHE PATENTSCHRIFT

(11) **EP 1 851 261 B2**
(45) Veröffentlichungstag und Bekanntmachung des Hinweises auf die Entscheidung über den Einspruch: **20.02.2019**
(45) Hinweis auf die Patenterteilung: 27.05.2015
(21) Anmeldenummer: 06708195.0
(22) Anmeldetag: 10.02.2006
(51) Int. Cl.: C08G 18/32, C08G 18/66, C09J 175/04

(54) **ZWEIKOMPONENTIGE POLYURETHANZUSAMMENSETZUNGEN, INSBESONDERE GEEIGNET FUER DEN EINSATZ ALS STRUKTURELLE KLEBSTOFFE**
TWO COMPONENT POLYURETHANE COMPOSITIONS, ESPECIALLY SUITABLE FOR USE IN STRUCTURAL ADHESIVES
COMPOSITIONS DE POLYURÉTHANES À DEUX COMPOSANTS, ESPÉCIALEMENT UTILE DANS LES ADHÉSIFS DE STRUCTURE

(30) Priorität: 11.02.2005 EP 05101001
(43) Veröffentlichungstag der Anmeldung: 07.11.2007
(73) Patentinhaber: SIKA TECHNOLOGY AG, CH-6340 Baar (CH)
(72) Erfinder: DEMMIG, Martin, 21037 Hamburg (DE)
(74) Vertreter: Sika Patent Attorneys
(86) Internationale Anmeldenummer: PCT/EP2006/050853
(87) Internationale Veröffentlichungsnummer: WO 2006/084900

(56) Entgegenhaltungen:
- EP-A- 0 454 446
- EP-A- 0 556 758
- US-A- 3 252 944
- US-A1- 2004 072 952

## Beschreibung

### Technisches Gebiet

Die Erfindung betrifft das Gebiet der zweikomponentigen Polyurethanzusammensetzungen, insbesondere der strukturellen Zweikomponenten-Polyurethanklebstoffe.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit schnell höhere Kräfte aufnehmen können. Für den Einsatz als strukturelle Klebstoffe werden jedoch hohe Ansprüche in Bezug auf Festigkeiten und Klebkräfte an solche Klebstoffe gestellt, da derartige Klebstoffe Elemente von tragenden Strukturen darstellen. Hohe Festigkeiten werden üblicherweise durch hohe Vernetzungsgrade erreicht. Dies wird üblicherweise durch den Einsatz von höherfunktionellen Polyolen oder Polyamine und höher funktionellen Polyisocyanaten erreicht.

So offenbart beispielsweise EP 1 253 159 A1 in den Beispielen einen strukturellen Klebstoff, deren Polyolkomponente eine Mischung eines tetrafunktionellen aliphatischen Polyols sowie eines difunktionellen aliphatischen Polyols umfasst und deren Isocyanatkomponente ein Prepolymer basierend auf Polypropylenglycol und 4,4'-Diphenylmethandiisocyanat, ist.

Allerdings bewirkt ein hoher Einsatz der höherfunktionellen Reaktanden, dass einerseits die Dehnung massiv zurückgeht, wodurch Spannungsspitzen bei Belastungen auftreten und derartige Klebstoffe spröde werden.

Die US 2004/072952 beschreibt reaktive Schmelzklebstoffe, die nicht polymere aromatische Dialkohole wie 1,5-Dihydroxynaphthalen, 2',4'-Dihydroxybenzophenon und 4,4'-(Hexafluoroisopropyliden)diphenyl enthalten. Es wird angegeben, dass durch den Zusatz der Dialkohole die Standfestigkeit (green strength) der Klebstoffe gegenüber Klebstoffen ohne diesen Bestandteil erhöht werden kann.

Polyuethanzusammensetzungen, die aus der Umsetzung von Polyisocyanaten mit einem Gemisch aus alkoxylierten aromatischen Polyolen und aliphatischen Triolen im Verhältnis von 1:1 herstellbar sind, sind aus der EP 0 454 446 bekannt. Dieses Dokument befasst sich mit thermisch vernetzbaren Zusammensetzungen, die zu Laminaten verarbeitet und in dieser Form als Leiterplatten verwendet werden können. Es besteht der Wunsch nach schnellen Klebstoffen, die hohe Festigkeiten und trotzdem eine hohe Elastizität aufweisen.

### Darstellung der Erfindung

Aufgabe der vorliegenden Erfindung ist es daher, eine zweikomponentige Polyurethanzusammensetzung, insbesondere einen strukturellen zweikomponentigen Polyurethanklebstoff, zur Verfügung zu stellen, der bei hoher Festigkeit gleichzeitig über eine hohe Dehnung verfügt. Dies wird durch die zweikomponentige Polyurethanzusammensetzung gemäss Anspruch 1 ermöglicht.

Erstaunlicherweise wird durch den Zusatz eines alkoxylierten aromatischen Diols zu einem aliphatischen Triols in der Polyolkomponente die Dehnung erhöht, die Festigkeit jedoch nicht erniedrigt.

Die verbesserte Dehnung führt zu einer erhöhten Schlagzähigkeit des ausgehärteten Materials. Ausserdem wurde festgestellt, dass die erfindungsgemässen Zusammensetzung, insbesondere durch die Verwendung eines alkoxylierten aromatischen Diols, eine die Haftung auf metallischen Oberflächen verbessert wird. Schliesslich konnte beobachtet werden, dass sich die erfindungsgemässen Zusammensetzungen durch eine hervorragende Alterungsstabilität, insbesondere gegen Feuchtigkeit und Temperaturwechsel, auszeichnen.

### Wege zur Ausführung der Erfindung

Die vorliegende Erfindung betrifft eine zweikomponentige Polyurethanzusammensetzung, bestehend aus einer Polyolkomponente **K1** und einer Polyisocyanatkomponente **K2.** Die Polyolkomponente **K1** umfasst hierbei mindestens ein alkoxyliertes aromatisches Diol **A1** sowie mindestens ein aliphatisches Triol **A2.** Die Polyisocyanatkomponente K2 umfasst mindestens ein Polyisocyanat B1, wobei es sich bei dem Polyisocyanat **B1** um Polyisocyanate **B1'** handelt, die neben zwei oder mehreren freien Isocyanat-Gruppen mindestens eine Harnstoff- oder eine Urethan- oder eine Biuret- oder eine Urethdiongruppe aufweisen und auf Diphenylmethandiisocyanat (2,4'- und/oder 4,4'-MDI)-basierende Polyisocyanate sind.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter einem "aromatischen Diol" wird hier und im folgenden ein Diol verstanden, welches mindestens einen aromatischen Kern und zwei Hydroxylgruppen aufweist. Im Diol können auch mehrere aromatische Kerne vorhanden sein. Vorzugsweise handelt es sich bei den Hydroxylgruppen nicht um phenolische Gruppen, d.h. sie sind vorteilhaft nicht unmittelbar am aromatischen Kern angeordnet.

Der aromatische Kern kann auch kondensiert und/oder eine heteroaromatisch und/oder weitere Substituenten aufweisend sein. In einem heteroaromatischen Kern sind Heteroatome vorhanden, die Teil des aromatischen Rings oder Ringsystems sind.

Beispiele von derartigen aromatischen Kernen sind substituierte Benzol, Naphthalin, Anthracen, Phenanthren, Imidazol, Pyridin, Pyrrol, Pyrimidin, Pyrazin, Chinolin, Phenazin. Beispiele von Diolen mit mehreren aromatischen Kernen sind Diole mit dem Grundgerüst eines Biphenyls, Terphenyls, 2,2'-Bipyridins, Diphenylmethans, 1,1-Diphenylethans oder 2,2-Diphenylpropans.

Besonders geeignet haben sich aromatische Diole gezeigt, die aus Phenol und aus Formaldehyd, Acetaldehyd oder Aceton oder Mischungen daraus hergestellt werden, insbesondere Bisphenol-A, Bisphenol-F oder Bisphenol-A/F.

Vorzugsweise handelt es sich beim alkoxylierten aromatischen Diol **A1** um ein ethoxyliertes und/oder propoxyliertes, aromatisches Diol.

Derartige alkoxylierte Diole weisen bevorzugt die Struktur der Formel (I) auf

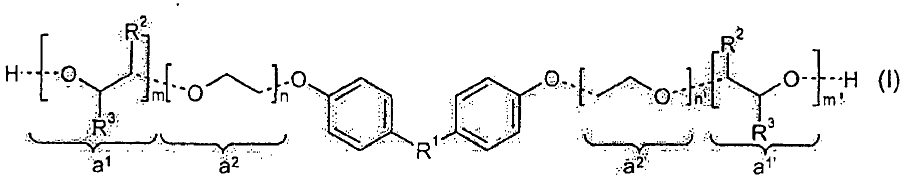

Hierbei stellt der Substituent R¹ eine Gruppe CH₂, CH(CH₃) oder C(CH₃)₂ dar.

Die Indizes n, n', m und m' sind jegliche Werte, derart dass n+n'+m+m' = 1 bis 20, insbesondere n+n'+m+m' = 1 bis 8.

Weiterhin stellen die Substituenten R² und R³ je nachdem R² = H und R³ = Methyl oder R² = Methyl und R³ = H dar.

Die Segmente a¹ und a^{1'} bedeuten einen Oxypropyleneinheit (PO) und a² und a^{2'} eine Oxyethyleneinheit (EO). Die gestrichelten Linien in Formel (I) stellen schematisch, dar, dass die Abfolge der aneinander gebundenen Alkylenglykol-Segmente a¹, a^{1'}, a² und a^{2'} variabel ist. So ist eine blockweise oder eine abwechselnde oder eine zufällige Reihenfolge dieser Oxyalkyleneinheiten möglich. Die Herstellung von derartig alkoxylierten aromatischen Diolen erfolgt auf eine dem Fachmann bekannte Art und Weise.

Es ist dem Fachmann weiterhin klar, dass bei einer Alkoxylierung eines Diols auch durchaus auch Moleküle mit unterschiedlichem Alkoxylierungsgrad in beiden Ketten entstehen können. Weiterhin ist es dem Fachmann auch klar, dass bei Alkoxylierungen stets Verteilungen von unterschiedlichen Molekülen auftreten. Dies zeigt sich in unter anderem auch darin, dass der Totalalkoxylierungsgrad ("*TAG*" = n+n'+m+m') auch ungeradzahlig oder einen nicht-ganzzahligen Wert annehmen kann.

Rein propoxylierte aromatische Diole der Formel (I) sind gegenüber rein ethoxylierten oder EO/PO-gemischt alkoxylierten aromatischen Diolen der Formel (I) bevorzugt, d.h. n ist bevorzugt = n'=0.

Besonders bevorzugt ist das aromatischen Diol **A1** ein Diol der Formel (I) mit R¹ = CH₂ oder C(CH₃)₂ H, insbesondere C(CH₃)₂.

Als meist bevorzugt gezeigt haben sich aromatische Diole **A1** der Formel (I) mit R¹ = C(CH₃)₂, n=n'=0 und mit einem Totalalkoxylierungsgrad zwischen 2 und 16.

Es kann vorteilhaft sein, dass die zweikomponentige Polyurethanzusammensetzung auch Mischungen unterschiedlicher aromatischen Diole **A1** enthält.

Das aromatische Diol **A1** wird bevorzugt in einer Menge von 2 bis 10 Gew.-%, bezogen auf die gesamte Zusammensetzung, eingesetzt.

Beim aliphatischen Triol **A2** handelt es sich um ein aliphatisches Triol mit einem Molekulargewicht von 360 bis 6000 g/mol, entsprechend einem OH-Equivalenzgewicht von 120 bis 2000, insbesondere einem Molekulargewicht von 120 bis 2000 g/mol, bevorzugt von 160 bis 1700 g/mol.

Es gibt unterschiedliche Arten von derartigen aliphatischen Triolen. So können sie beispielsweise Urethan- und/oder Harnstoff- und/oder Ethergruppen enthalten. Die Gestalt der Triole kann sehr unterschiedlich sein. So sind beispielsweise sternförmige oder kammförmige Triole möglich. Es ist weiterhin möglich, dass im Triol sowohl primäre als auch sekundäre Hydroxylgruppen vorhanden sind. Bevorzugt sind alle drei Hydroxylgruppen primäre Hydroxylgruppen.

Beispielsweise lassen sich aliphatischen Triole **A2** aus einem aliphatischen Triisocyanat, insbesondere aus einem Isocyanurat, welches aus drei Diisocyanat-Molekülen gebildet wird, im Überschuss von aliphatischen Diolen, insbesondere von Polyetherdiolen, gegebenenfalls durch weitere Nachverlängerung mittels aliphatischen Diisocyanaten und aliphatischen Diolen, erreichen.

Weitere beispielhafte aliphatischen Triole **A2** können aus niedermolekularen aliphatischen Triolen, wie zum Beispiel Trimethylolpropan oder Glycerin, und einem aliphatischen Diisocyanat und nachfolgender Reaktion mit einem aliphatischen Diol erhalten werden.

Weiterhin beispielhafte aliphatischen Triole **A2** sind Produkte einer Alkoxylierungsreaktion von niedermolekularen aliphatischen Triolen, wie zum Beispiel Trimethylolpropan oder Glycerin. Besonders handelt es sich hierbei um ethoxylierte, oder propoxylierte oder butoxylierte aliphatische Triole, insbesondere von Trimethylolpropan oder Glycerin.

Es kann vorteilhaft sein, dass die zweikomponentige Polyurethanzusammensetzung auch Mischungen unterschiedlicher aliphatischer Triole **A2** enthält. Insbesondere hat sich als vorteilhaft gezeigt, dass Mischungen eines aliphatischen Triols **A2** mit einem tieferen Molekulargewicht, insbesondere zwischen 360 und 2700 g/mol, mit einem aliphatischen Triol **A2** mit einem höheren Molekulargewicht, insbesondere zwischen 4200 und 6000 g/mol, eingesetzt werden.

Wenn lediglich ein aliphatischen Triol **A2** eingesetzt wird, ist es von Vorteil ein solches mit einem mittleren Molekulargewicht, insbesondere zwischen 2000 und 4000 g/mol, zu wählen.

Das Gewichtsverhältnis **A1/A2** von aromatischem Diol **A1** und aliphatischen Triol **A2** beträgt zwischen 0.05 und 0.3.

Weiterhin kann die Polyolkomponente **K1** noch andere Bestandteile umfassen. Vorteilhaft werden Aushärtungskatalysatoren eingesetzt. Derartige Katalysatoren sind dem Fachmann für die Reaktion von Polyisocyanaten mit Polyolen, gegebenenfalls auch für mit Polyaminen oder Wasser, bekannt. Als Beispiele für derartige Katalysatoren seien Zinn-, Zink- und Wismut-organische Metallkatalysatoren, z.B. Dibutylzinndilaurat, oder tertiäre Amine, z.B. 1,4-Diazobicyclo[2.2.2]octan (DABCO), erwähnt.

Als zusätzliche Bestandteile können weiterhin Diole, insbesondere Polyoxyalkylendiolen, und/oder Diamine sein. Als Amine sind insbesondere aliphatische, araliphatische, cycloaliphatische sowie toxikologisch unbedenkliche aromatische Amine geeignet. Durch die Auswahl und Konzentration von geeigneten Aminen sowie Katalysatoren kann die Topfzeit und das Härtungsverhalten sowie das Abrutschverhalten vorteilhaft beeinflusst werden.

Die Polyisocyanatkomponente **K2** umfasst mindestens ein Polyisocyanat **B1.**

Das Polyisocyanat **B1** sind Polyisocyanate **B1',** die neben zwei oder mehreren freien Isocyanat-Gruppen mindestens eine Harnstoff- oder eine Urethan- oder eine Biuret- oder eine Urethdiongruppe aufweisen und auf Diphenylmethandiisocyanat (2,4'- und/oder 4,4'-MDI) basieren. Als besonders geeignet haben Polyisocyanate vom Typ, wie sie kommerziell als Desmodur® VH 20 von Bayer erhältlich sind, gezeigt.

Beide Komponenten **K1** und **K2** können neben den bereits erwähnten weitere Bestandteile, wie sie der Fachmann aus der Zweikomponenten-Polyurethanchemie her kennt, aufweisen. Diese können in nur einer Komponente oder in beiden vorhanden sein. Als derartig zusätzliche Bestandteile werden beispielsweise Lösungsmittel, Weichmacher und/oder Extender Füllstoffe, wie Russe, Kreiden oder Talke, Haftvermittler, insbesondere Trialkoxysilane, sowie Thixotropiermittel, wie amorphe Kieselsäuren, Zeolithe eingesetzt.

Wie der Fachmann für Polyurethanklebstoffe weiss, muss bei der Herstellung der Komponenten, insbesondere bei der Polyisocyanatkomponente **K2,** darauf geachtet werden, dass die Rohstoffe möglichst frei sind von Wasser sind und dass während und nach deren Herstellung möglichst keine Feuchtigkeit in Kontakt mit der Komponente treten kann. Dies wird einerseits durch ein physikalisches oder chemisches Trocknen der Ausgangssubstanzen sowie durch das Arbeiten unter Inertgas, üblicherweise Stickstoff, erreicht.

Die Komponenten **K1** und **K2** werden vorteilhaft derart formuliert, dass das Volumenverhältnis von Komponente **K1** und **K2** zwischen 1:3 und 3:1, insbesondere zwischen 1:2 und 2:1, beträgt. Besonders bevorzugt beträgt dieses Verhältnis in etwa 1:1. Das Mischverhältnis ist vorzugsweise derart, dass die NCO-Gruppen der Komponente **K2** stöchiometrisch zu den NCOreaktiven Gruppen, typischerweise OH-Gruppen, der Komponente **K1** erfolgt. Erfolgt die Mischung nicht im wesentlichen stöchiometrisch, d.h. mit Abweichungen von mehr als 5%, erfolgt die Reaktion der Komponenten **K1** und **K2** nicht optimal, was zu einer Reduktion in den mechanischen Eigenschaften der ausgehärteten Polyurethanzusammensetzung führt. Dies trifft vor allem für einen Überschuss der Polyolkomponente zu. Bei einem Überschuss von Polyisocyanat ist dies zwar grundsätzlich ebenfalls nachteilig, aber durch die nachträgliche Reaktion der nicht umgesetzten Isocyanat-Gruppen mit Feuchtigkeit, beispielsweise von der Luftfeuchtigkeit herrührend, welche gegebenenfalls zu weiteren Vernetzungen führen kann, kann die verschlechterte Mechanik zumindest teilweise geheilt werden.

Die Komponenten **K1** und **K2** werden vor der Anwendung getrennt von einander gelagert und erst bei oder unmittelbar vor der Anwendung miteinander gemischt. Die Komponenten sind vorteilhaft in einer Verpackung, welche aus zwei von einander getrennten Kammern besteht, vorhanden und zwar derart, dass die Polyolkomponente **K1** in der einen Kammer und die Polyisocyanatkomponente **K2** in der anderen Kammer vorhanden ist. Die Komponenten **K1** und **K2** werden in die Kammern der Verpackung eingefüllt und luft- und feuchtigkeitsdicht verschlossen.

Bevorzugte derartige Packung sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammernöffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für grössere Anwendungen, insbesondere für Anwendungen in der industriellen Fertigung, werden die Komponenten **K1** und **K2** vorteilhaft in Fässer oder Hobbocks abgefüllt und gelagert. In diesem Falle werden die Komponenten über hydraulische Pressen, insbesondere über Folgeplatten, ausgepresst und über Leitungen einer Mischapparatur, wie sie üblich für Zwei-Komponentenklebstoffe in der industriellen Fertigung üblich eingesetzt werden, zugeführt.

Bei jeglicher Packung ist es wichtig, dass zumindest die Polyisocyanatkomponente **K2** luft- und feuchtigkeitsdicht verschlossen ist, so dass beide Komponenten über lange Zeit, d.h. typischerweise länger als 6 Monate, lagerfähig sind

Das Verfahren der Verklebung umfasst die folgenden Schritte:
- Mischen der vorgängig beschriebenen Komponenten **K1** und **K2,**
- Applizieren der gemischten Polyurethanzusammensetzung auf mindestens einer der zu verklebenden Substratoberfläche,
- Fügen innerhalb der Offenzeit
- Aushärten der Polyurethanzusammensetzung.

Das Mischen erfolgt typischerweise über Statikmischer oder mit Hilfe von dynamischen Mischern. Beim Mischen ist darauf zu achten, dass die zwei Komponenten möglichst homogen gemischt werden. Werden die zwei Komponenten schlecht gemischt, treten lokale Abweichungen von dem optimalen Mischungsverhältnis, d.h. im wesentlichen stöchiometrisch, auf, was sich in einer Verschlechterung der mechanischen Eigenschaften der ausgehärteten Polyurethanzusammensetzung auswirkt. Um die Mischqualität auch visuell zu beurteilen, ist es von Vorteil, wenn die zwei Komponenten **K1** und **K2** zwei verschiedene Farben aufweisen, die untereinander, aber auch von der Mischung, visuell gut voneinander unterschieden werden können. Ein Beispiel für eine derartige Farbkombination liegt vor, wenn die eine Komponente schwarz und die andere weiss ist. Eine gute Mischung liegt, dann vor, wenn eine homogene graue Farbe vorliegt und keinerlei Streifen oder Muster in Hell- oder Dunkelgrau oder weiss oder schwarz vorliegen.

Die gemischte Polyurethanzusammensetzung wird auf mindestens einer der zu verklebenden Substratoberfläche appliziert. Das zu verklebende Substrat ist vorzugsweise ein Metall, ein Kunststoff, ein Glas oder eine Keramik ist. Typischerweise sind zwei Substrate vorhanden, welche verklebt werden sollen. Es ist möglich, dass der Fügepartner, d.h. das zweite Substrat, identisch oder unterschiedlich vom ersten Substrat ist. Der Klebstoffauftrag kann auf dem ersten und/oder dem zweiten Fügepartner erfolgen. Nach dem Klebstoffauftrag werden die Fügepartner innerhalb der Offenzeit gefügt. Anschliessend an das Fügen erfolgt die Aushärtung der Polyurethanzusammensetzung.

Somit entsteht ein Verbund der Fügepartner, wobei der Klebstoff diese Fügepartner kraftschlüssig miteinander verbindet.

Die Polyurethanzusammensetzung wird vorzugsweise als struktureller Klebstoff eingesetzt. Typische Bespiele für Anwendungen derartiger Klebstoffe finden sich im Bauwerken, Automobilen, Fahrzeugen oder Schiffen. Hierbei ist der ausgehärtete Klebstoff ein Teil einer tragenden Struktur und bildet somit ein wichtiges Bindeglied, an dessen mechanischen Eigenschaften hohe Ansprüche gestellt werden. Die vorliegende Erfindung erfüllt diese hohen Ansprüche bestens.

Weiterhin zeigt die erfindungsgemässe Klebstoffzusammensetzung durch die hohe Dehnung hohe Schlagzähigkeit und ausserdem eine hervorragende Alterungsstabilität, insbesondere gegen Feuchtigkeit und Temperaturwechsel. Ausserdem wurde festgestellt, dass die erfindungsgemässen Zusammensetzung, insbesondere durch die Verwendung eines alkoxylierten aromatischen Diols, eine die Haftung auf metallischen Oberflächen verbessert wird.

### Beispiele

### Herstellung

Die in Tabelle 1 beispielhaft angeführten Zusammensetzungen ***Ex1*** und ***Ex2*** sowie ***Ref. 1*** als Referenzbeispiel weisen alle dieselbe Komponente **K2** auf.

Zur Herstellung der Komponenten **K1, *ExA1*** und ***ExA2*** sowie der Referenzkomponente ***RefA. 1,*** wurde die Polyolmischung in einem Vakuumdissolver vorgelegt und nach Zugabe von Katalysator und Trocknungsmittel unter Ausschluss von Feuchtigkeit während 20 Minuten bei 25°C gerührt. Anschliessend wurden diese Polypolkomponenten **K1** in eine Kammer einer side-by-side Doppelkartusche (vol./vol=1:1) aus Polypropylen abgefüllt und luft- und feuchtigkeitsdicht mit Kunststoffkolben verschlossen.

Bei Komponente **K2** wurde getrocknete Kreide dem Polyisocyanat zugegeben und unter Rühren und unter Vakuum homogen bei 25°C in einem Vakuumdissolver während 20 Minuten eingearbeitet. Anschliessend wurde diese Polyisocyanatkomponente **K2** in die zweite Kammer der oben genannten side-by-side Doppelkartusche abgefüllt und ebenfalls luft- und feuchtigkeitsdicht mit Kunststoffkolben verschlossen.

Komponenten **K1** und **K2** wurden in der in Tabelle 1 angegebenen Menge mittels Statikmischer volumetrisch 1:1 vermischt.

### Messungen

Die gemischten Komponenten K1 und K2 wurden in Hantelformel gemäss gemäss ISO 527, Teil 2, 1 B gegeben und während 24 h bei 25°C und anschliessend während 3h bei 105°C gehärtet. Nach einer Konditionierungszeit von 24h bei 25°C wurden E-Modul, Zugfestigkeit und Dehnung der so hergestellten Probekörpern gemäss ISO 527 auf einer Zwick Z020 Zugprüfmaschine bei einer Prüftemperatur von 20°C und einer Prüfgeschwindigkeit 50 mm/min gemessen.

**Tabelle 1. Zusammensetzungen und Messresultate**

| **Beispiele** | | | ***Ref.1*** | ***Ex1*** | ***Ex2*** |
|---|---|---|---|---|---|
| Komponente **K1** | | | ***RefA.1*** (Gew.-%) | ***ExA1*** (Gew.-%) | ***ExA2*** (Gew.-%) |
| | Polyethertriol | **A2** | 47.5 | 40.0 | 30 |
| | OH-Equivalenzgewicht 146 g | | | | |
| | Hydroxylzahl 385 mg KOH/g | | | | |
| | Polypropylenethertriol | **A2** | 47.5 | 45.0 | 45.0 |
| | OH-Equivalenzgewicht 1600 g | | | | |
| | Hydroxylzahl 35 mg KOH/g | | | | |
| | *Propoxyliertes Bisphenol-A (TAG=3)* | **A1** | 0 | 10 | 20 |
| | DABCO | | 0.2 | 0.2 | 0.2 |
| | Zeolith (Trocknungsmittel) | | 4.8 | 4.8 | 4.8 |
| **A1/A2** | | | 0 | 0.118 | 0.267 |
| | | | | | |
| Komponente | **K2** | | (Gew.-%) | (Gew.-%) | (Gew.-%) |
| | Desmodur® VH 20 | **B1** | 48.0 | 48.0 | 48.0 |
| | Kreide | | 52.0 | 52.0 | 52.0 |
| | | | | | |
| **K2/K1** (w/w) | | | 1.274 | 1.2643 | 1.1988 |
| | | | | | |
| E-Modul [MPa] | | | 1200 | 1415 | 1583 |
| Zugfestigkeit [MPa] | | | 21 | 23 | 25 |
| Bruchdehnung[%] | | | 45 | 53 | 47 |

Es ist aus den Resultaten ersichtlich, dass die Bespiele ***Ex1*** und ***Ex2*** gegenüber ***Ref.1*** bei höherer Zugfestigkeit auch höhere Bruchdehnung aufweisen.

## Patentansprüche

1. Zweikomponentige Polyurethanzusammensetzung bestehend aus einer Polyolkomponente **K1** und einer Polyisocyanatkomponente **K2**;
wobei die Polyolkomponente **K1**
mindestens ein alkoxyliertes aromatisches Diol **A1**
sowie mindestens ein aliphatisches Triol **A2**
umfasst,
und wobei die Polyisocyanatkomponente **K2**
mindestens ein Polyisocyanat **B1**
umfasst, wobei das Gewichtsverhältnis **A1/A2** zwischen 0,05 und 0,3 beträgt und wobei es sich bei dem Polyisocyanat **B1** um Polyisocyanate **B1'** handelt, die neben zwei oder mehreren freien Isocyanat-Gruppen mindestens eine Harnstoff- oder eine Urethan- oder eine Biuret- oder eine Urethdiongruppe aufweisen und auf Diphenylmethandiisocyanat (2,4'- und/oder 4,4'-MDI)-basierende Polyisocyanate sind.

2. Zweikomponentige Polyurethanzusammensetzung gemäss Anspruch 1, **dadurch gekennzeichnet, dass** das alkoxylierte aromatische Diol **A1** ein ethoxyliertes und/oder ein propoxyliertes aromatisches Diol ist.

3. Zweikomponentige Polyurethanzusammensetzung gemäss Anspruch 2, **dadurch gekennzeichnet, dass** das alkoxylierte aromatische Diol **A1** die Formel (I) aufweist 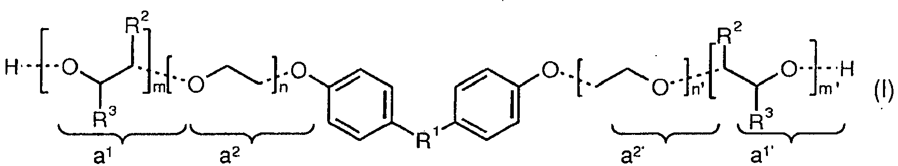
wobei R¹ = CH₂, CH(CH₃) oder C(CH₃)₂ darstellt,
R² = H und R³ = Methyl oder R² = Methyl und R³ = H darstellen, sowie
n+n'+m+m' = 1 bis 20, insbesondere n+n'+m+m' = 1 bis 8, sind, und die gestrichelte Linien darstellen, dass die Abfolge der aneinander gebundenen Alkylenglykol-Segmente a¹, a^{1'}, a² und a^{2'} variabel ist.

4. Zweikomponentige Polyurethanzusammensetzung gemäss Anspruch 3, **dadurch gekennzeichnet, dass** n=n'=0 ist.

5. Zweikomponentige Polyurethanzusammensetzung gemäss einer der vorhergehenden Ansprüche, **dadurch gekennzeichnet, dass** das aromatische Diol **A1** in einer Menge von 2 bis 10 Gew.-%, bezogen auf die gesamte Zusammensetzung, vorhanden ist.

6. Zweikomponentige Polyurethanzusammensetzung gemäss einer der vorhergehenden Ansprüche, **dadurch gekennzeichnet, dass** das Volumenverhältnis von Komponente **K1** und **K2** zwischen 1:3 und 3:1, bevorzugt in etwa 1:1, beträgt.

7. Packung bestehend aus einer Verpackung mit zwei von einander getrennten Kammern und einer zweikomponentigen Polyurethanzusammensetzung gemäss einem der Ansprüche 1 bis 6, wobei in der einen Kammer die Polyolkomponente **K1** und in der anderen Kammer die Polyisocyanatkomponente **K2** vorhanden ist.

8. Verfahren zum Verkleben umfassend die Schritte
- Mischen der Komponenten **K1** und **K2** einer zweikomponentigen Polyurethanzusammensetzung gemäss einem der Ansprüche 1 bis 6,
- Applizieren der gemischten Polyurethanzusammensetzung auf mindestens eine der zu verklebenden Substratoberfläche,
- Fügen innerhalb der Offenzeit
- Aushärten der Polyurethanzusammensetzung.

9. Verfahren gemäss Anspruch 8, **dadurch gekennzeichnet, dass** das zu verklebende Substrat ein Metall, ein Kunststoff, ein Glas oder eine Keramik ist.

10. Verklebter Artikel, welcher nach einem Verfahren gemäss Anspruch 8 oder 9 verklebt wurde.

11. Verwendung einer zweikomponentigen Polyurethanzusammensetzung gemäss einem der Ansprüche 1 bis 6 als Klebstoff, insbesondere als struktureller Klebstoff.

12. Verwendung gemäss Anspruch 11 als Klebstoff für den Bau von Bauwerken, Automobilen, Fahrzeugen oder Schiffen.

## Claims

1. Two-component polyurethane composition composed of a polyol component **K1** and a polyisocyanate component **K2**,
the polyol component **K1** comprising
at least one alkoxylated aromatic diol **A1**
and at least one aliphatic triol **A2,**
and the polyisocyanate component **K2** comprising
at least one polyisocyanate **B1**
wherein the weight ratio A1/A2 is between 0.05 and 0.3 and wherein the polyisocyanate **B1** are polyisocyanates **B1'** which as well as two or more free isocyanate groups contain at least one urea or urethane or biuret or uretdione group and are polyisocyanates based on (2,4'- and/or 4,4'-MDI) diphenylmethane diisocyanate.

2. Two-component polyurethane composition according to Claim 1, **characterized in that** the alkoxylated aromatic diol **A1** is an ethoxylated and/or a propoxylated aromatic diol.

3. Two-component polyurethane composition according to Claim 2, **characterized in that** the alkoxylated aromatic diol **A1** has the formula (I) 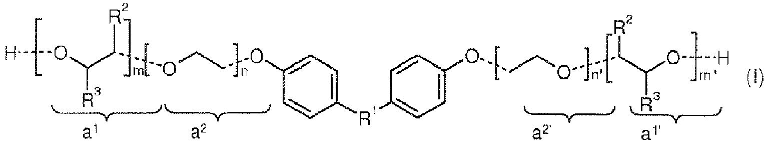
where R¹ = CH₂, CH(CH₃) or C(CH₃)₂,
R² = H and R³ = methyl, or R² = methyl and R³ = H, and also
n+n'+m+m' = 1 to 20, more particularly n+n'+m+m' = 1 to 8, and the dashed lines indicate that the sequence of the mutually attached alkylene glycol segments a¹, a^{1'}, a² and a^{2'} is variable.

4. Two-component polyurethane composition according to Claim 3, **characterized in that** n=n'=0.

5. Two-component polyurethane composition according to one of the preceding claims, **characterized in that** the aromatic diol **A1** is present in an amount of 2% to 10% by weight, based on the overall composition.

6. Two-component polyurethane composition according to one of the preceding claims, **characterized in that** the volume ratio of components **K1** and **K2** is between 1:3 and 3:1, preferably approximately 1:1.

7. Package consisting of a pack with two separate chambers and a two-component polyurethane composition according to one of Claims 1 to 6, the polyol component **K1** being present in one chamber and the polyisocyanate component **K2** being present in the other chamber.

8. Method of adhesive bonding comprising the steps of
- mixing the components **K1** and **K2** of a two-component polyurethane composition according to one of Claims 1 to 6,
- applying the mixed polyurethane composition to at least one substrate surface to be bonded,
- carrying out joining within the open time,
- curing the polyurethane composition.

9. Method according to Claim 8, **characterized in that** the substrate to be bonded is a metal, plastic, glass or ceramic.

10. Bonded article bonded by a method according to Claim 8 or 9.

11. Use of a two-component polyurethane composition according to one of Claims 1 to 6 as an adhesive, more particularly as a structural adhesive.

12. Use according to Claim 11 as an adhesive for the construction of built structures, automobiles, vehicles or boats.

## Revendications

1. Composition de polyuréthane à deux composants composée d'un composant polyol **K1** et d'un composant polyisocyanate **K2** ;
le composant polyol **K1** comprenant
au moins un diol aromatique alcoxylé **A1**
et au moins un triol aliphatique **A2,**
et le composant polyisocyanate **K2** comprenant
au moins un polyisocyanate **B1,**
le rapport en poids **A1/A2** se situant entre 0,05 et 0,3 et le polyisocyanate **B1** étant des polyisocyanates **B1'** qui, en plus de deux groupes isocyanate libres ou plus, contiennent au moins un groupe urée ou uréthane ou biuret ou uréthdione et sont des polyisocyanates à base de (2,4' - et/ou 4,4' MDI)-diisocyanate de diphénylméthane.

2. Composition de polyuréthane à deux composants selon la revendication 1, **caractérisée en ce que** le diol aromatique alcoxylé **A1** est un diol aromatique éthoxylé et/ou un diol aromatique propoxylé.

3. Composition de polyuréthane à deux composants selon la revendication 2, **caractérisée en ce que** le diol aromatique alcoxylé **A1** répond à la formule (I) 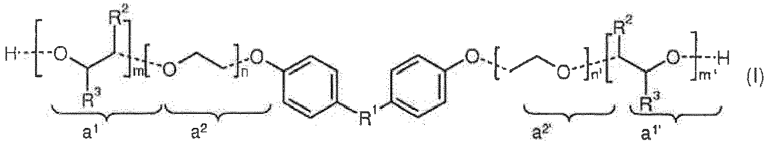
où R¹ = CH₂, CH(CH₃) ou C(CH₃)₂,
R² = H et R³ = méthyle, ou R² = méthyle et R³ = H, et également
n+n'+m+m' = 1 à 20, plus particulièrement n+n'+m+m' = 1 à 8, et les traits discontinus indiquent que la séquence des segments alkylène glycol reliés ensemble a¹, a^{1'}, a² et a^{2'} est variable.

4. Composition de polyuréthane à deux composants selon la revendication 3, **caractérisée en ce que** n=n'=0.

5. Composition de polyuréthane à deux composants selon l'une quelconque des revendications précédentes, **caractérisée en ce que** le diol aromatique **A1** est présent en une quantité de 2 % à 10 % en poids, rapporté à la composition globale.

6. Composition de polyuréthane à deux composants selon l'une quelconque des revendications précédentes, **caractérisée en ce que** le rapport en volume des composants **K1** et **K2** se situe entre 1 : 3 et 3 : 1, de préférence est d'approximativement 1 : 1.

7. Emballage constitué d'un paquet avec deux chambres séparées l'une de l'autre et d'une composition de polyuréthane à deux composants selon l'une quelconque des revendications 1 à 6, le composant polyol **K1** étant présent dans une chambre et le composant polyisocyanate **K2** étant présent dans l'autre chambre.

8. Procédé de collage par adhésif comprenant les étapes de
- mélange des composants **K1** et **K2** d'une composition de polyuréthane à deux composants selon l'une quelconque des revendications 1 à 6,
- application de la composition de polyuréthane mélangée à au moins une surface de substrat à coller,
- réalisation d'une jonction pendant le temps d'ouverture,
- durcissement de la composition de polyuréthane.

9. Procédé selon la revendication 8, **caractérisé en ce que** le substrat à coller est un métal, du plastique, du verre ou une céramique.

10. Article collé, collé par un procédé selon la revendication 8 ou 9.

11. Utilisation d'une composition de polyuréthane à deux composants selon l'une quelconque des revendications 1 à 6, en tant qu'adhésif, plus particulièrement en tant qu'adhésif structural.

12. Utilisation selon la revendication 11, en tant qu'adhésif pour la construction de structures bâties, d'automobiles, de véhicules ou de bateaux.
